# EUROPEAN PATENT SPECIFICATION

(11) **EP 1 279 439 B1**
(45) Date of publication and mention of the grant of the patent: **01.09.2010**
(21) Application number: 02015169.2
(22) Date of filing: 08.07.2002
(51) Int. Cl.: B03C 3/36, B03C 3/155

(54) **Electric dust collector, method of collecting dust and blower using the same**
Elektrische Staubsammelvorrichtung, Verfahren zum Sammeln von Staub und diese verwendendes Gebläse
Collecteur électrique de poussière, méthode de collecte de poussière et soufflerie les utilisant

(30) Priority: 23.07.2001 JP 2001221133
(43) Date of publication of application: 29.01.2003
(73) Proprietor: Panasonic Corporation, Kadoma-shi Osaka 571-8501 (JP)
(72) Inventor: Kubo, Tsugio, Yokaichi-shi, Shiga 527-0075 (JP); Akamine, Ikuo, Kusatsu-shi, Shiga 525-0057 (JP); Imasaka, Toshiyuki, Kusatsu-shi, Shiga 525-0045 (JP); Kobayashi, Yoshinori, Moriyama-shi, Shiga 524-0021 (JP)
(74) Representative: Balsters, Robert

(56) References cited:
- GB-A- 1 369 142
- US-A- 3 976 448
- US-A- 5 332 425
- PATENT ABSTRACTS OF JAPAN vol. 1999, no. 11, 30 September 1999 (1999-09-30) & JP 11 151452 A (MIDORI ANZEN CO LTD), 8 June 1999 (1999-06-08)

## Description

### Field of the Invention

The present invention relates to an electric dust collector that collects dust in air, more particularly relates to a highly efficient electric dust collector that makes use of corona discharge and is to be employed in air conditioners or air purifiers. The present invention also relates to a method of collecting dust using the same dust collector.

### Background of the Invention

An electric dust collector comprises mainly a charging section that generates corona discharge for charging dust and a dust collecting section that collects the charged dust. Those two elements are integrated into one unit and disposed at an air sucking port of air conditioners , air purifiers or similar apparatus.

One of conventional electric dust collectors is disclosed in Japanese Patent Application Non-Examined Publication No. H11-151452. Fig. 7 shows this dust collector, which collects dust in the following manner: A voltage is applied between discharge electrode 503 and counter electrode 504, both the electrodes forming charging section 501, thereby generating corona discharge. This corona discharge charges dust in air blown there. Then dust collecting section 502, formed of grounding electrode 505 disposed downstream of blowing path and high-voltage electrode 506, collects electrically the charged dust. Discharge electrode 503 is formed of linear wires or needles, and spaced away at a given distance from counter electrode 504. Dust collecting section 502 is constructed to collect electrically dust; however, there is another instance, i.e., a charged filter is disposed for collecting dust.

When corona discharge is generated between discharge electrode 503 and counter electrode 504, discharge occurs at a minimal electric resistance, i.e., at the shortest distance between the two electrodes. The discharge is thus generated only at a limited area. Therefore, it is necessary to prepare a densely charged area for increasing a dust collection rate. To meet this requirement, wires or needles are preferably disposed densely. Voltages should be applied responsive to a number of wires or needles, and electric current increases accordingly, which invites more power consumption.

Reference may be made to EP-A-0804966 which discloses the pre-characterizing features of one aspect of the invention, and to GB-A-118342 which discloses the pre-characterizing features of another aspect of the invention. Further reference may be made to US-A-5332425, GB-A-1369142, US-A-3976448, JP-A-11151452 and US-A-4671808.

### Summary of the Invention

The present invention is defined in the claims.

The present invention addresses the problems discussed above and aims to provide an electric dust collector that charges dust efficiently with less power consumption and yet increases a dust collection rate. The present invention also aims to provide a blower employing the same electric dust collector.

In one embodiment, a dust collector comprises the following elements:
a charging section;
a dust collecting section; and
acoustic wave generating means for irradiating an acoustic wave to at least a part of discharge portion of the charging section.

This structure allows the acoustic wave generator to irradiate an acoustic wave to a corona discharging area.

In an alternative embodiment, the dust collector of the present invention has another structure that allows the discharge electrode of the charging section to be vibrated.

In the structure discussed previously, when an acoustic wave is irradiated to the corona discharging area, an area where electrons and ions are produced by the corona discharge increases. The vibration of the discharge electrode also increases this area. As a result, when particles in air blown to the dust collector passe through the dust collector, a probability of their being charged is increased. The irradiation of acoustic wave further activates Brownian movement of the dust particles passing through the irradiated area, so that a probability of collision between the dust particles is increased, which accelerates cohesion of the dust particles.

As such, the charging probability of dust particles in air is increased by enlarging the charging area, and the collision probability of dust particles is increased so that cohesion of dust particles can make a particle diameter easy to collect. As a result, a dust collector of a higher dust collection rate is obtainable.

### Brief Description of the Drawings

Fig. 1 is an exploded perspective view illustrating an example of a structure of an electric dust collector of the present invention.
Fig. 2 is an exploded perspective view illustrating a structure of a dust collecting unit of an electric dust collector in accordance with a first exemplary embodiment of the present invention.
Fig. 3A is a lateral view of a dust collecting unit viewed from acoustic wave generating means in the case of disposing the acoustic wave generating means between a discharge electrode and a counter electrode for irradiating an acoustic wave.
Fig. 3B is a lateral view of a dust collecting unit viewed from acoustic wave generating means for irradiating an acoustic wave to an area including a discharge electrode.
Fig. 4 is an exploded perspective view illustrating a structure of a dust collecting unit equipped with a reflector of the electric dust collector in accordance with the first embodiment.
Fig. 5 is a perspective view illustrating a structure of a dust collecting unit of an electric dust collector in accordance with a second exemplary embodiment of the present invention.
Fig. 6 is an exploded perspective view illustrating a structure of a dust collecting unit of an electric dust collector in accordance with a third exemplary embodiment of the present invention.

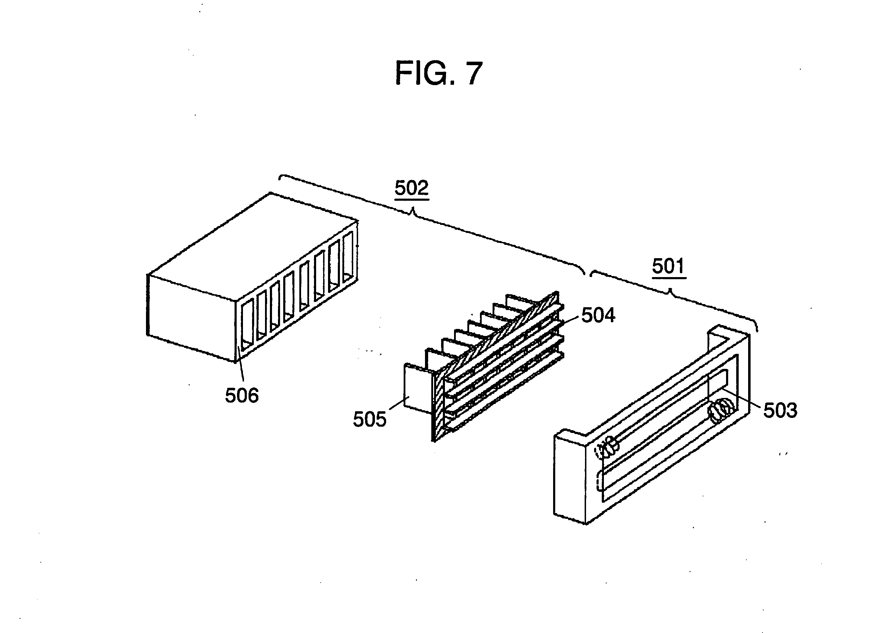

Fig. 7 is a perspective view illustrating an essential part of a conventional electric dust collector.

### Detailed Description of the Preferred Embodiment

Exemplary embodiments of the present invention are demonstrated hereinafter with reference to the accompanying drawings.

### Exemplary Embodiment 1

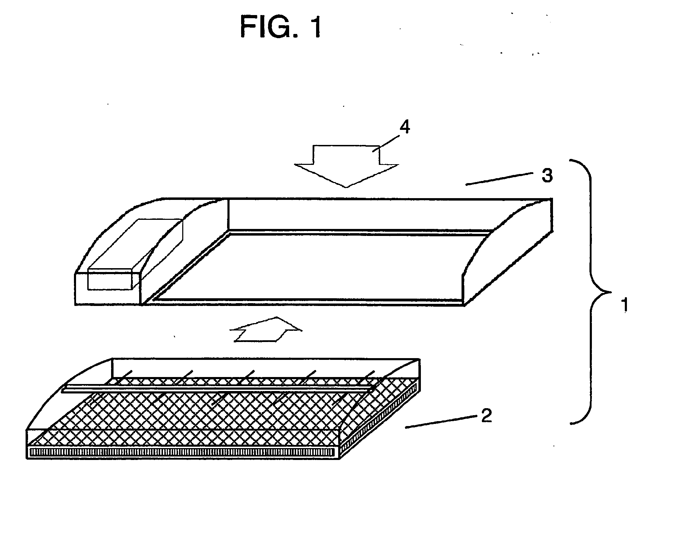

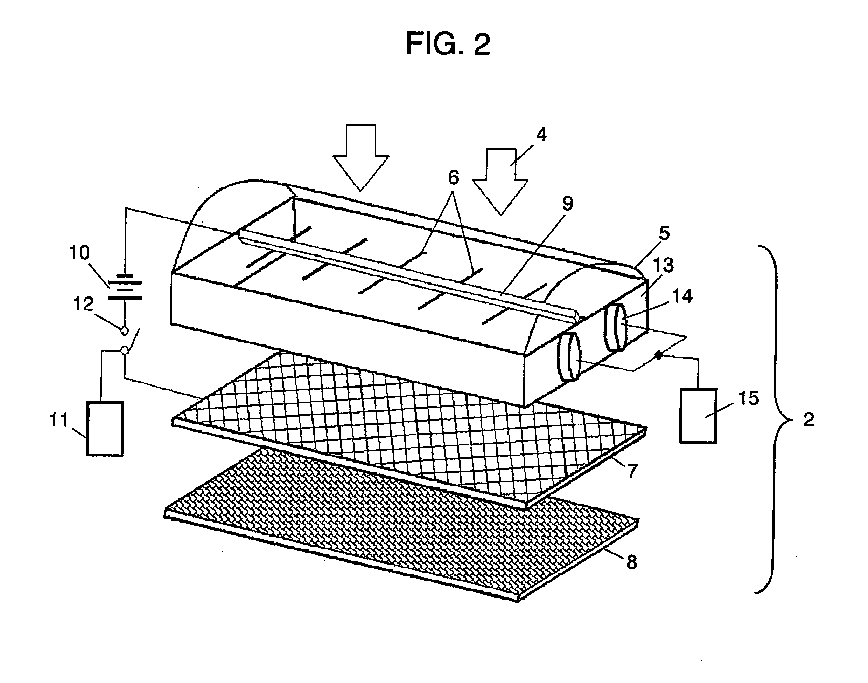

Fig. 1 is an exploded perspective view illustrating an example of a structure of an electric dust collector, and Fig. 2 is an exploded perspective view illustrating a structure of a dust collecting unit of an electric dust collector in accordance with the first exemplary embodiment. As shown in Fig. 1, electric dust collector 1 includes dust collecting unit 2 and main unit 3, in which dust collecting unit 2 is accommodated. Dust collector 1 is disposed, e.g., in an indoor unit of air conditioners. When interior air 4 passes through dust collecting unit 2, dust particles included in interior air 4 are collected, and air 4 undergoes a heat exchanger of the indoor unit, then blown out into the room again. As shown in Fig. 2, dust collecting unit 2 comprises housing 5 made of resin material molded, discharge electrode 6, counter electrode 7 and dust filter 8. Housing 5 shapes in substantially a rectangle for enlarging a pass-through area of interior air 4. A plurality of needle-like discharge electrodes 6 are supported by supporter 9. Sheet-like counter electrode 7 having an opening through which the interior air passes is fixed to housing 5 and is apart from discharge electrode 6 at a given distance. Dust filter 8 is disposed on a downstream side of interior air 4 of counter electrode 7, and is detachable from dust collecting unit 2. When dust adheres to filter 8, it can be detached for cleaning. The plurality of discharging electrodes 6 are coupled with a common electrode (not shown) disposed within supporter 9. DC power supply 10 outside the dust collecting unit applies a voltage between discharge electrodes 6 and counter electrode 7. The voltage application is controlled by switch 12 which is opened or closed by a signal from controller 11. As such, discharge electrodes 6 and counter electrode 7 constitute a charging section, and dust filter 8 forms a dust collecting section.

There are various ways to categorize the charging section and the dust collecting section. For instance, as already described in the background of the invention, a discharge electrode and a counter electrode constitute a charging section, and a grounding electrode and a high voltage electrode constitute a dust collecting section. Further, the counter electrode and the grounding electrode are integrated into one unit, and a voltage of this part is used as a common. The counter electrode and the dust collecting section can be integrated into one unit. In other words, discharge electrode 6 (negative electrode) and counter electrode 7 (positive electrode) that functions also as the dust collecting section work together to collect negatively charged dust particles, and the dust particles are collected by the positive counter electrode 7 (dust collecting section).

In this embodiment, needle-like discharge electrodes 6 are used; however, a linear wire made of tungsten is also usable instead of needle-like member. A voltage is applied so that discharge electrodes 6 become negative; however, the voltage can be applied in the other way so that the discharge electrode can be positive.

In dust collecting unit 2, when switch 12 is closed by a signal from controller 11, dc power supply 10 applies a voltage between discharge electrode 6 and counter electrode 7. If a dc voltage of several kilo-volts is applied therebetween, corona discharge occurs between the two electrodes, so that positive or negative electric charges are generated. Dust particles passing there are thus charged. An electret filter charged positive or negative, or charged partially positive and partially negative is used as a dust filter 8 of dust collecting unit 2. As a result, the dust particles charged in corona discharging area are absorbed by filter 8 and collected. In this first embodiment, the electret filter charged per se is used as dust filter 8; however, when a diameter of dust particles coherent with each other is greater, a non-charged filter, i.e., not a regular one, can be used.

In the embodiment shown in Fig. 2, dust filter is disposed at the lowest part of downstream of blowing direction of dust collecting unit 2. However, when counter electrode 7 is a grounding electrode, the charges on the dust particles are absorbed by the grounding electrode, and the particles sometimes become neutral. Therefore, dust filter 8 is preferably disposed between discharge electrodes 6 and counter electrode 7 so that the dust particles keep being charged and are collected by filter 8.

In this embodiment, corona discharge occurs in a direction substantially parallel to the flow of interior air 4; however, if the corona discharge occurs in a vertical direction to the flow of interior air 4, a similar result of collecting dust can be obtained.

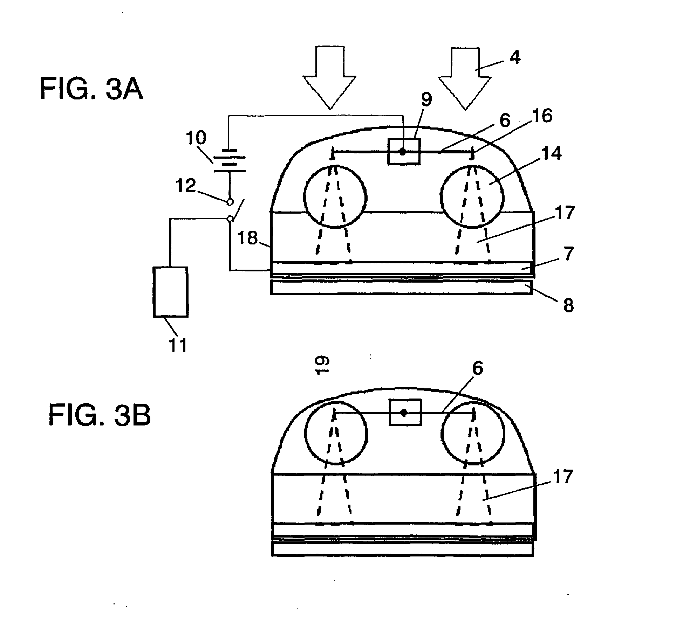

In this embodiment, an acoustic wave is irradiated to at least a part of discharge portion of the charging section. As shown in Fig. 2, acoustic wave generating means 14 is provided to side face 13 of housing 5, where an opening (not shown) is provided to side face 13. Acoustic wave controller 15 for controlling acoustic wave generating means 14 is provided outside dust collecting unit 2. Fig. 3 is a lateral view of dust collecting unit 2, shown in Fig. 2, viewed from acoustic wave generating means 14. When the corona discharge occurs, tip 16 of needle-like discharge electrode 6 originates the discharge to counter electrode 7. The discharge only produces a small corona discharging area. To enlarge the corona discharging area, increasing a number of discharge electrodes 6 is a possible method; however, this method boosts power consumption due to more voltage applications. The present invention irradiates acoustic waves for enlarging the discharging area with low power consumption. The acoustic waves can enlarge the discharging area because charged particles in the area vibrate to diffuse.

In the first embodiment a piezoelectric element is used as acoustic wave generating means 14. An area where acoustic waves are irradiated is described with reference to Fig. 3. When a dc voltage is applied between discharge electrodes 6 and counter electrode 7, corona discharge 17 occurs from tip 16 of needle-like discharge electrode 6 and extends forming a conical shape in a space between the two electrodes. As shown in Fig. 3A, acoustic wave generating means 14 is disposed so that it can irradiate acoustic waves between the two electrodes. The position from which the acoustic waves are irradiated is preferably as close as possible to discharge electrode 6, because diffusion of charged particles at the root of the discharge can further diffuse the charged particles into an extensive area before they arrive at counter electrode 7. An instance is shown in Fig. 3B, which proves that irradiation to an area including discharge electrode 6 results in more effective expansion of the discharge. The acoustic waves can be irradiated to, e.g., discharge electrode 6 or the space between discharge electrodes 6 and counter electrode 7 from outside of dust collecting unit 2 in a slanting direction. As such, an acoustic wave is irradiated substantially in a vertical direction to an electric field that generates the discharge, so that the acoustic wave can be focused on a specific place with ease. The irradiation can be in a parallel direction to the electric field with a similar advantage.

In the case where needle-like or wire-like discharge electrodes 6 are arranged substantially all around, acoustic wave generating means 14 are disposed on side wall 13 all around, so that acoustic waves can be irradiated to entire discharging area. In this case, the acoustic waves can be irradiated to the corona discharge between numbers of discharge electrodes 6 and counter electrode 7, and the more effective result can be expected.

Acoustic wave generating means 14 is controlled the intensity of its acoustic waves, frequency, and on/off by acoustic-wave controller 15. Regarding the frequency of the acoustic waves, it does not matter whether or not the frequency is in a human audible range or out of the range. However, the frequency is preferably over 20 kHz (ultrasonic wave) which is out of human audible range, so that a user does not feel unpleasantly or misunderstand the frequency as a malfunction. If a user has a pet such as dogs or cats, they can hear a frequency over 20 kHz. Thus a higher frequency is preferably for those pets. In this case, an appropriate frequency is optionally selectable depending on a user's condition.

In this embodiment, a piezoelectric element is used as acoustic wave generating means 14; however, a speaker, a sonar, or a crystal oscillator that generates vibrations can be used instead. An appropriate device can be selected depending on conditions such as directivity of originating acoustic waves, a cost and a structure of the dust collecting unit, an area size to be irradiated, or a required energy intensity of acoustic waves.

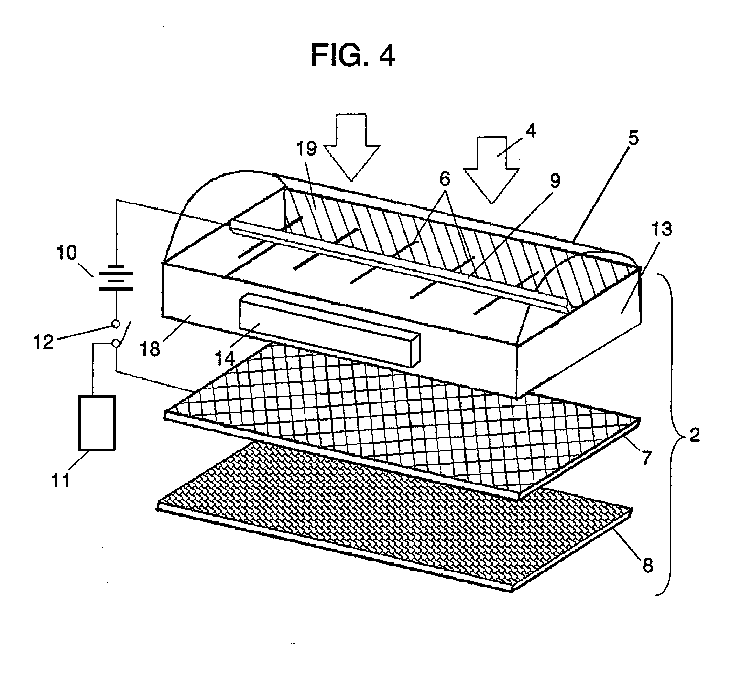

As shown in Fig. 4, reflector 19 that reflects the acoustic wave originated by acoustic wave generating means 14 is provided facing inward of dust collecting unit 2 on at least a part of side wall 18 of housing 5. The side wall here means a wall of housing 5 that is one of the elements forming dust collecting unit 2, and the acoustic waves are irradiated toward side wall 18. In Fig. 4, reflector 19 provided on side wall 18 is placed such that the direction of originating acoustic wave faces reflector 19. Instead of on the side wall of dust collecting unit 2, reflector 19 can be provided on a side wall of main unit 3, shown in Fig. 1, which accommodates dust collecting unit 2. In this case, an opening is prepared on side wall 18 corresponding to the reflector provided to main unit 3.

This structure allows an acoustic wave arriving at reflector 19 to reflect and diffuse, so that this acoustic wave is irradiated to the corona discharge again, which can enhance diffusion of the corona discharge. If a directivity of an acoustic wave from acoustic wave generating means 14 disposed on side wall 18 is low, another reflector 19 is needed on a place other than side wall 18. Reflector 19 is preferably made of non-conductive material or low conductive material, so that it does not adversely affect a direction of generating the corona discharge.

A buffering member (not shown) that absorbs acoustic waves or a reflection member can be prepared if necessary, so that the acoustic wave is prevented from diffusing in an unnecessary direction to adversely affect other elements.

Further, in Fig. 2 and Fig. 3, acoustic wave generating means 14 is disposed to side wall 13 on a shorter side of rectangular dust-collecting unit 2. However, as shown in Fig. 4, it can be disposed at a center on a longer side, thereby irradiating acoustic waves both right and left of the longer side. In this case, the acoustic wave is irradiated to the charging section or both the longer sides of the dust collecting section, so that the irradiation distance becomes short and the corona discharge can be diffused by a greater energy of the acoustic wave. This structure enlarges an area of corona discharge generated in the charging section, and increases a probability of collision between particles thereby accelerating cohesion of those particles. As a result, a dust collection rate of the electric dust collector can be improved.

The charging section and acoustic wave generating means 14 are electrically coupled with power supply 10 and controller 11. Therefore, if dust collecting section 8 is detachable from main unit 3 of dust collector 1, a user can maintain dust collecting section 8 with ease. Further, dust-collecting unit 2 formed of the charging section and the dust collecting section is detachable from main unit 3, and dust collecting section 3 is detachable from unit 2. This structure allows a user to detach unit 2 from dust collector 1 mounted to an indoor unit of an air conditioner, and the user further can detach the dust collecting section from dust-collecting unit 2 for maintenance. Thus an electric dust collector with a superb maintainability is obtainable.

### Exemplary Embodiment 2

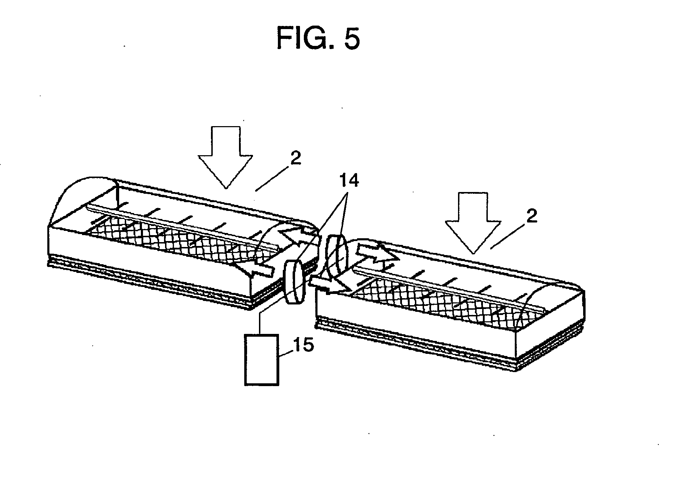

The second exemplary embodiment is demonstrated hereinafter with reference to Fig. 5. Elements similar to those in the first embodiment have the same reference marks and the descriptions thereof are omitted here. Fig. 5 is a perspective view illustrating a structure of dust collecting unit 2 of an electric dust collector in accordance with the second embodiment.

In an air conditioner or the like, dust collecting unit 2 is divided into plural parts as shown in Fig. 5 in order to enlarge an interior-air sucking area as well as improve maintainability of the dust collecting unit.

The second embodiment allows acoustic wave generating means to irradiate acoustic waves to such plural dust-collecting units 2. As shown in Fig. 5, acoustic wave generating means 14 is placed between both the dust collecting units 2 so that it can irradiate acoustic waves to corona discharges generated in both units 2. Acoustic wave generating means 14 can be integrated into unit 2 or can be placed independently of unit 2. It can be anyway placed or formed such that it can irradiate acoustic waves to at least a part of a discharge portion.

This structure allows one single acoustic wave generating means 14 to irradiate acoustic waves to two dust-collecting units 2 disposed to sandwich the acoustic wave generating means. Thus a number of components can be reduced, and electric wires can be routed to only one place, so that a smaller space is required for installing.

### Exemplary Embodiment 3

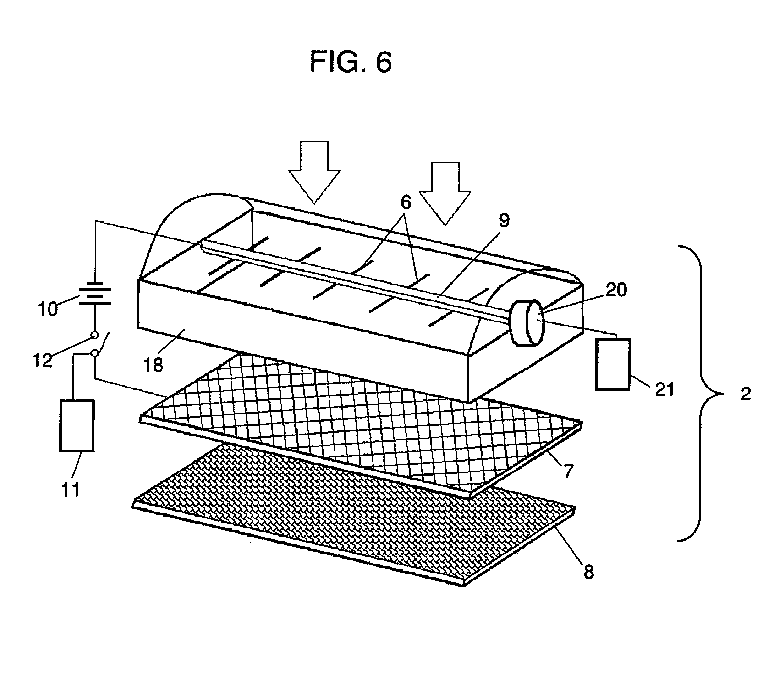

The third exemplary embodiment is demonstrated hereinafter with reference to Fig. 6. Similar elements to those in the first and second embodiments have the same reference marks and the descriptions thereof are omitted here. Fig. 6 is a perspective view illustrating a structure of dust collecting unit 2 in accordance with the third embodiment.

The third embodiment differs from the first one in the following point:
In the first embodiment, corona discharge is diffused by irradiation of acoustic waves, while in the third embodiment, vibration generating means 20 is prepared to vibrate discharge electrodes 6 or counter electrode 7, and vibration controller 21 controls vibration conditions. Vibration of discharge electrodes 6 can diffuse the corona discharge, so that the discharge area is enlarged and a dust collection rate is increased. In the case of Fig. 6, supporter 7 that supports discharge electrodes 6 is vibrated, thereby vibrating electrodes 6 connected to supporter 7. In the case of vibrating electrodes 6 directly, insulation is preferably prepared in order to prevent electricity due to the discharge from travelling to vibration generating means 20. Counter electrode 7 can be vibrated by vibration generating means 20 with a similar effect. A vibration frequency produced by vibration generating means 20 is preferably set at a frequency of ultrasonic wave so that a user cannot hear unpleasant noises.

The present invention employs those electric dust collectors previously demonstrated in a blower, whereby a blower of a high dust-collection rate is obtainable, and mildew in a blowing path is suppressed. Employment of such a blowing path in air conditioners or air purifiers realizes more hygienic and comfortable air conditioned environments.

The electric dust collector of the present invention includes a charging section, a dust collecting section, and acoustic wave generating means that irradiates acoustic waves to at least a part of a discharge portion of the charging section. This structure allows irradiation of acoustic wave to a corona discharging area, so that an area where the corona discharge is generated in the charging section can be enlarged, and at the same time, a probability of collision between particles is increased, which accelerates cohesion of the particles. As a result, a dust collection rate can be increased, and a hygienic and comfortable air conditioner or air purifier is obtainable.

## Claims

1. An electric dust collector comprising:
a charging section (6, 7) for charging dust in an air-flow passing area of the dust collector, by corona discharge;
a dust collecting section (8); and
acoustic wave generating means (14) that irradiates an acoustic wave into said air-flow passing area;
wherein the acoustic wave generating means (14) is configured to irradiate the acoustic wave such that the acoustic wave enters the air-flow passing area in a region at a discharge portion of said charging section;
**characterized in that** the acoustic wave generating means (14) generates an ultrasonic wave, whereby the vibrations diffuse the corona discharge generated by the charging section, and
the dust collecting section (8) collects dust charged by the diffused corona discharge.

2. The electric dust collector of claim 1, wherein a plurality of dust collecting units (2) formed of at least said charging section and said dust collecting section are disposed, and said acoustic wave generating means (14) irradiates the acoustic wave to the plurality of dust collecting units (2).

3. The electric dust collector of claim 1, wherein said charging section is formed of a discharge electrode (6) and a counter electrode (7), and said acoustic wave generating means (14) irradiates the acoustic wave to at least a space including the discharge electrode (6).

4. The electric dust collector of claim 1, wherein said charging section is formed of a discharge electrode (6) and a counter electrode (7), and said acoustic wave generating means irradiates the acoustic wave to at least a discharging space between the discharge electrode (6) and the counter electrode (7).

5. The electric dust collector of claim 1, wherein a main body (3) of the electric dust collector comprises said charging section (6, 7), said dust collecting section (8) and said acoustic wave generating means (14), and said dust collecting section (8) is detachable from the main body (3).

6. The electric dust collector of claim 1, wherein a main body of the electric dust collector includes:
a dust collecting unit (2) that comprises said charging section (6, 7) and said dust collecting section (8); and
a main unit that comprises said acoustic wave generating means (14),
wherein the dust collecting unit (2) is detachable from the main unit.

7. The electric dust collector of claim 6 including the dust collecting unit (2) formed of said charging section (6, 7) integrated with said dust collecting section (8), wherein said dust collecting section (8) is detachable from the dust collecting unit (2).

8. The electric dust controller of claim 6, wherein the dust collecting unit (2) includes a housing (5) of the dust collecting unit (2), and the main unit includes a housing of the main unit, wherein at least either one of the houses is made of one of non-conductive material and low-conductive material.

9. The electric dust collector of claim 1 including a rectangular dust collecting unit (2) formed of at least said charging section (6, 7) integrated with said dust collecting section (8), wherein said acoustic wave generating means (14) is disposed at a substantial center of longitudinal direction of the dust collecting unit (2) for irradiating the acoustic wave to right and left sides of the longitudinal direction.

10. The electric dust collector of any one of claim 1 through claim 8, wherein the dust collector (2) is accommodated in a housing (5), and a reflector (19) for reflecting the acoustic wave generated by said acoustic wave generating means (14) is disposed on at least a part of a side wall (18) of the housing (5).

11. The electric dust collector of claim 10, wherein the reflector (19) is disposed facing at least a direction of originating the acoustic wave.

12. The electric dust collector of claim 10, wherein the reflector (19) is made of one of non-conductive material and low-conductive material.

13. The electric dust collector of claim 1, wherein the acoustic wave is irradiated in a substantially vertical direction to an electric field applied for discharging.

14. The electric dust collector of claim 1, wherein said charging section (6, 7) and said dust collecting section (8) are disposed in an air blowing path, and said charging section (6, 7) discharges in a direction substantially parallel to an air blowing direction in the air blowing path.

15. The electric dust collector of claim 1, wherein said dust collecting section (8) uses an electret filter.

16. The electric dust collector of any one of claim 1 through claim 8, wherein the electric dust collector is accommodated in a housing (5), and an acoustic wave buffering member for absorbing the acoustic wave generated by said acoustic wave generating means is disposed at a predetermined place of the housing.

17. An electric dust collector comprising:
a dust collecting unit (2) including a charging section (6, 7) having a discharge electrode (6) and a counter electrode (7) for charging dust by corona discharge,
the electronic dust collector further comprising vibration generating means (20) that is coupled to at least one of the discharge electrode (6) and the counter electrode (7), for applying mechanical vibrations thereto,
**characterized in that** the vibration generating means (20) generates a vibration frequency of an ultrasonic wave region, whereby the vibrations diffuse the corona discharge generated by the charging section, and
the electronic dust collector further comprises a dust collecting section (8) located downstream of the charging section (6, 7) thereby to collect dust charged by the diffused corona discharge.

18. The electric dust collector of claim 17, wherein a main body of the dust collector is formed of at least the charging section (6, 7) the dust collecting section (8) and the vibration generating means (20), and the dust collecting section is detachable from the main body.

19. The electric dust collector of claim 17, including said dust collecting unit (2) formed of at least the charging section (6, 7) integrated with the dust collecting section (8), wherein the dust collecting section (8) is detachable from said dust collecting unit (2).

20. The electric dust collector of claim 17, wherein a main body of the electric dust collector includes:
said dust collecting unit (2) that comprises the charging section (6, 7) and the dust collecting section (8); and
a main unit that comprises the vibration generating means (20),
wherein said dust collecting unit (2) is detachable from the main unit.

21. The electric dust collector of claim 17, wherein the charging section (6, 7) and the dust collecting section (8) are disposed in an air blowing path, and at least one of the discharge electrode (6) and the counter electrode (7) is vibrated in a direction substantially vertical to an air blowing direction in the air blowing path.

22. The electric dust collector of claim 17, wherein the dust collecting section (8) uses an electret filter.

23. A blower comprising:
a blowing fan;
a blowing path including an electric dust collector as defined in any one of claim 1 through claim 22.

24. A method of collecting dust, said method comprising the steps of:
generating corona discharge by applying electric field between a discharge electrode (6) and a counter electrode (7), both electrodes being disposed at a corona discharging area in an air-flow passing area; and
collecting dust with a dust collecting section (8) disposed in the air-flow passing area; and
irradiating an acoustic wave into the air-flow passing area;
wherein the acoustic wave enters the air-flow passing area at the corona discharging area,
**characterized in that** the acoustic wave is in the ultrasonic wave region, and the acoustic wave diffuses the corona discharge generated by the discharge electrode (6) and the counter electrode (7), and
the step of collecting comprises collecting dust charged by said diffused corona discharge.

25. The method of collecting dust of claim 24, wherein the acoustic wave is irradiated in a direction substantially vertical to a direction of applying electric field.

26. A method of collecting dust, said method comprising the steps of:
generating corona discharge by applying electric field between a discharge electrode (6) and a counter electrode (7), both electrodes being disposed in an air-flow passing area; and
applying mechanical vibrations to vibrate at least one of the discharge electrode (6) and the counter electrode (7);
**characterized in that** said mechanical vibrations are of an ultrasonic wave region, and the vibrations diffuse the corona discharge generated by the discharge electrode (6) and the counter electrode (7), and
the method further comprises collecting dust charged by said diffused corona discharge, with a dust collecting section (8) downstream of the discharge electrode (6).

## Patentansprüche

1. Ein elektrischer Staubabscheider, der folgendes umfasst:
einen Aufladungsabschnitt (6, 7) zur Aufladung von Staub in einem Luftstromdurchgangsbereich des Staubabscheiders mittels Koronaentladung;
einen Staubabscheidungsabschnitt (8); und
ein Mittel (14) zur Schallwellenerzeugung, das eine Schallwelle in den Luftstromdurchgangsbereich ausstrahlt;
wobei das Mittel (14) zur Schallwellenerzeugung derart zur Ausstrahlung der Schallwelle konfiguriert ist, dass die Schallwelle in einem Bereich bei einem Entladungsabschnitt des Aufladungsabschnitts in den Luftstromdurchgangsbereich gelangt;
**dadurch gekennzeichnet, dass** das Mittel (14) zur Schallwellenerzeugung eine Ultraschallwelle erzeugt, wodurch die Schwingungen die von dem Aufladungsabschnitt erzeugte Koronaentladung zerstreuen; und
der Staubabscheidungsabschnitt (8) den durch die zerstreute Koronaentladung aufgeladenen Staub abscheidet.

2. Der elektrische Staubabscheider nach Anspruch 1, wobei eine Vielzahl von Staubabscheidungseinheiten (2), die mindestens von dem Aufladungsabschnitt und dem Staubabscheidungsabschnitt gebildet werden, angeordnet ist und das Mittel (14) zur Schallwellenerzeugung die Schallwelle an die Vielzahl von Staubabscheidungseinheiten (2) ausstrahlt.

3. Der elektrische Staubabscheider nach Anspruch 1, wobei der Aufladungsabschnitt von einer Entladungselektrode (6) und einer Gegenelektrode (7) gebildet wird und das Mittel (14) zur Schallwellenerzeugung die Schallwelle an mindestens einen Bereich ausstrahlt, der die Entladungselektrode (6) einschließt.

4. Der elektrische Staubabscheider nach Anspruch 1, wobei der Aufladungsabschnitt von einer Entladungselektrode (6) und einer Gegenelektrode (7) gebildet wird und das Mittel zur Schallwellenerzeugung die Schallwelle an mindestens einen Entladungsbereich zwischen der Entladungselektrode (6) und der Gegenelektrode (7) ausstrahlt.

5. Der elektrische Staubabscheider nach Anspruch 1, wobei ein Hauptkörper (3) des elektrischen Staubabscheiders den Aufladungsabschnitt (6, 7), den Staubabscheidungsabschnitt (8) und das Mittel (14) zur Schallwellenerzeugung umfasst und der Staubabscheidungsabschnitt (8) von dem Hauptkörper (3) lösbar ist.

6. Der elektrische Staubabscheider nach Anspruch 1, wobei ein Hauptkörper des elektrischen Staubabscheiders folgendes einschließt:
eine Staubabscheidungseinheit (2), die den Aufladungsabschnitt (6, 7) und den Staubabscheidungsabschnitt (8) umfasst; und
eine Haupteinheit, die das Mittel (14) zur Schallwellenerzeugung umfasst,
wobei die Staubabscheidungseinheit (2) von der Haupteinheit lösbar ist.

7. Der elektrische Staubabscheider nach Anspruch 6, der die Staubabscheidungseinheit (2) einschließt, die aus dem Aufladungsabschnitt (6, 7) gebildet ist, der mit dem Staubabscheidungsabschnitt (8) integriert ist, wobei der Staubabscheidungsabschnitt (8) von der Staubabscheidungseinheit (2) lösbar ist.

8. Der elektrische Staubabscheider nach Anspruch 6, wobei die Staubabscheidungseinheit (2) ein Gehäuse (5) der Staubabscheidungseinheit (2) einschließt und die Haupteinheit ein Gehäuse der Haupteinheit einschließt, wobei mindestens eines der beiden Gehäuse aus einem nicht leitenden Material oder einem schlecht leitenden Material hergestellt ist.

9. Der elektrische Staubabscheider nach Anspruch 1, der eine rechtwinklige Staubabscheidungseinheit (2) einschließt, die aus mindestens dem Aufladungsabschnitt (6, 7) gebildet ist, der mit dem Staubabscheidungsabschnitt (8) integriert ist, wobei das Mittel (14) zur Schallwellenerzeugung an einer wesentlichen Mitte der Längsrichtung der Staubabscheidungseinheit (2) zur Ausstrahlung der Schallwelle nach links und nach rechts von der Längsrichtung angeordnet ist.

10. Der elektrische Staubabscheider nach einem der Ansprüche 1 bis 8, wobei der Staubabscheider (2) in einem Gehäuse (5) untergebracht ist und ein Reflektor (19) zum Reflektieren der Schallwelle, die von dem Mittel (14) zur Schallwellenerzeugung erzeugt wird, an mindestens einem Teil einer Seitenwand (18) des Gehäuses (5) angeordnet ist.

11. Der elektrische Staubabscheider nach Anspruch 10, wobei der Reflektor (19) derart angeordnet ist, dass er mindestens in eine Ursprungsrichtung der Schallwelle zeigt.

12. Der elektrische Staubabscheider nach Anspruch 10, wobei der Reflektor (19) aus einem nicht leitenden Material oder einem schlecht leitenden Material hergestellt ist.

13. Der elektrische Staubabscheider nach Anspruch 1, wobei die Schallwelle in einer im Wesentlichen vertikalen Richtung zu einem elektrischen Feld ausgestrahlt wird, das zur Entladung angelegt wird.

14. Der elektrische Staubabscheider nach Anspruch 1, wobei der Aufladungsabschnitt (6, 7) und der Staubabscheidungsabschnitt (8) in einem Luftstromweg angeordnet sind und der Aufladungsabschnitt (6, 7) sich in einer Richtung entlädt, die im Wesentlichen parallel zu einer Luftstromrichtung in dem Luftstromweg ist.

15. Der elektrische Staubabscheider nach Anspruch 1, wobei der Staubabscheidungsabschnitt (8) einen Elektret-Filter verwendet.

16. Der elektrische Staubabscheider nach einem der Ansprüche 1 bis 8, wobei der elektrische Staubabscheider in einem Gehäuse (5) untergebracht ist und ein Schallwellenpufferelement zum Absorbieren der Schallwelle, die von dem Mittel zur Schallwellenerzeugung erzeugt wird, an einer vorbestimmten Stelle des Gehäuses angeordnet ist.

17. Ein elektrischer Staubabscheider, der folgendes umfasst:
eine Staubabscheidungseinheit (2), die einen Aufladungsabschnitt (6, 7) mit einer Entladungselektrode (6) und einer Gegenelektrode (7) zur Aufladung von Staub mittels Koronaentladung einschließt;
wobei der elektrische Staubabscheider ferner ein Mittel (20) zur Schwingungserzeugung umfasst, das mindestens mit der Entladungselektrode (6) oder der Gegenelektrode (7) zur Aufbringung von mechanischen Schwingungen darauf gekoppelt ist;
**dadurch gekennzeichnet, dass** das Mittel (20) zur Schwingungserzeugung eine Schwingungsfrequenz eines Ultraschallwellenbereichs erzeugt, wodurch die Schwingungen die von dem Aufladungsabschnitt erzeugte Koronaentladung zerstreuen; und
wobei der elektrische Staubabscheider ferner einen Staubabscheidungsabschnitt (8) umfasst, der sich stromabwärts von dem Aufladungsabschnitt (6, 7) befindet, um **dadurch** den durch die zerstreute Koronaentladung aufgeladenen Staub abzuscheiden.

18. Der elektrische Staubabscheider nach Anspruch 17, wobei ein Hauptkörper des Staubabscheiders mindestens von dem Aufladungsabschnitt (6, 7), dem Staubabscheidungsabschnitt (8) und dem Mittel (20) zur Schwingungserzeugung gebildet wird und der Staubabscheidungsabschnitt von dem Hauptkörper lösbar ist.

19. Der elektrische Staubabscheider nach Anspruch 17, der die Staubabscheidungseinheit (2) einschließt, die aus mindestens dem Aufladungsabschnitt (6, 7) gebildet ist, der mit dem Staubabscheidungsabschnitt (8) integriert ist, wobei der Staubabscheidungsabschnitt (8) von der Staubabscheidungseinheit (2) lösbar ist.

20. Der elektrische Staubabscheider nach Anspruch 17, wobei ein Hauptkörper des elektrischen Staubabscheiders folgendes einschließt:
die Staubabscheidungseinheit (2), die den Aufladungsabschnitt (6, 7) und den Staubabscheidungsabschnitt (8) umfasst; und
eine Haupteinheit, die das Mittel (20) zur Schwingungserzeugung umfasst;
wobei die Staubabscheidungseinheit (2) von der Haupteinheit lösbar ist.

21. Der elektrische Staubabscheider nach Anspruch 17, wobei der Aufladungsabschnitt (6, 7) und der Staubabscheidungsabschnitt (8) in einem Luftstromweg angeordnet sind und mindestens die Entladungselektrode (6) oder die Gegenelektrode (7) in eine Richtung in Schwingung versetzt wird, die im Wesentlichen vertikal zu einer Luftstromrichtung in dem Luftstromweg ist.

22. Der elektrische Staubabscheider nach Anspruch 17, wobei der Staubabscheidungsabschnitt (8) einen Elektret-Filter verwendet.

23. Ein Gebläse, das folgendes umfasst:
einen Gebläseventilator;
einen Gebläseweg, der einen elektrischen Staubabscheider einschließt, wie in einem der Ansprüche 1 bis 22 definiert ist.

24. Ein Verfahren zur Staubabscheidung, wobei das Verfahren die folgenden Schritte umfasst:
Erzeugen einer Koronaentladung durch Anlegen eines elektrischen Feldes zwischen einer Entladungselektrode (6) und einer Gegenelektrode (7), wobei beide Elektroden in einem Koronaentladungsbereich in einem Luftstromdurchgangsbereich angeordnet sind; und
Abscheiden von Staub mit einem Staubabscheidungsabschnitt (8), der in dem Luftstromdurchgangsbereich angeordnet ist; und
Ausstrahlen einer Schallwelle in den Luftstromdurchgangsbereich;
wobei die Schallwelle in dem Koronaentladungsbereich in den Luftstromdurchgangsbereich gelangt;
**dadurch gekennzeichnet, dass** die Schallwelle in dem Ultraschallwellenbereich liegt und die Schallwelle die von der Entladungselektrode (6) und der Gegenelektrode (7) erzeugte Koronaentladung zerstreut; und
der Schritt des Abscheidens die Abscheidung des durch die zerstreute Koronaentladung aufgeladenen Staubs umfasst.

25. Das Verfahren zur Staubabscheidung nach Anspruch 24, wobei die Schallwelle in einer Richtung ausgestrahlt wird, die im Wesentlichen vertikal zu einer Richtung des angelegten elektrischen Feldes ist.

26. Ein Verfahren zur Staubabscheidung, wobei das Verfahren die folgenden Schritte umfasst:
Erzeugen einer Koronaentladung durch Anlegen eines elektrischen Feldes zwischen einer Entladungselektrode (6) und einer Gegenelektrode (7), wobei beide Elektroden in einem Luftstromdurchgangsbereich angeordnet sind; und
Aufbringen von mechanischen Schwingungen, um mindestens die Entladungselektrode (6) oder die Gegenelektrode (7) in Schwingung zu versetzen;
**dadurch gekennzeichnet, dass** die mechanischen Schwingungen in einem Ultraschallwellenbereich liegen und die Schwingungen die von der Entladungselektrode (6) und der Gegenelektrode (7) erzeugte Koronaentladung zerstreuen; und
wobei das Verfahren ferner die Abscheidung des durch die zerstreute Koronaentladung aufgeladenen Staubs mit einem Staubabscheidungsabschnitt (8) stromabwärts von der Entladungselektrode (6) umfasst.

## Revendications

1. Collecteur électrique de poussières comprenant :
une section de chargement (6, 7) pour charger des poussières dans une zone de passage de flux d'air du collecteur de poussières, par décharge corona ;
une section de collecte de poussières (8) ; et
un moyen de génération d'onde acoustique (14) qui envoie une onde acoustique à l'intérieur de ladite zone de passage de flux d'air ;
dans lequel le moyen de génération d'onde acoustique (14) est configuré pour envoyer l'onde acoustique de telle façon que l'onde acoustique pénètre dans la zone de passage de flux d'air dans une région au niveau d'une partie de décharge de ladite section de chargement ;
**caractérisé en ce que** le moyen de génération d'onde acoustique (14) génère une onde ultrasonore, d'où il résulte que les vibrations diffusent la décharge corona générée par la section de chargement, et
la section de collecte de poussières (8) collecte les poussières chargées par la décharge corona diffusée.

2. Collecteur électrique de poussières selon la revendication 1, dans lequel une pluralité d'unités de collecte de poussières (2) formées d'au moins ladite section de chargement et ladite section de collecte de poussières sont disposées, et ledit moyen de génération d'onde acoustique (14) envoie l'onde acoustique jusqu'à la pluralité d'unités de collecte de poussières (2).

3. Collecteur électrique de poussières selon la revendication 1, dans lequel ladite section de chargement est formée d'une électrode de décharge (6) et d'une contre-électrode (7), et ledit moyen de génération d'onde acoustique (14) envoie l'onde acoustique jusqu'à au moins un espace incluant l'électrode de décharge (6).

4. Collecteur électrique de poussières selon la revendication 1, dans lequel ladite section de chargement est formée d'une électrode de décharge (6) et d'une contre-électrode (7), et ledit moyen de génération d'onde acoustique envoie l'onde acoustique jusqu'à au moins un espace de décharge entre l'électrode de décharge (6) et la contre-électrode (7).

5. Collecteur électrique de poussières selon la revendication 1, dans lequel un corps principal (3) du collecteur électrique de poussières comprend ladite section de chargement (6, 7), ladite section de collecte de poussières (8) et ledit moyen de génération d'onde acoustique (14), et ladite section de collecte de poussières (8) est détachable du corps principal (3).

6. Collecteur électrique de poussières selon la revendication 1, dans lequel un corps principal du collecteur électrique de poussières inclut :
une unité de collecte de poussières (2) qui comprend ladite section de chargement (6, 7) et ladite section de collecte de poussières (8) ; et
une unité principale qui comprend ledit moyen de génération d'onde acoustique (14),
dans lequel l'unité de collecte de poussières (2) est détachable de l'unité principale.

7. Collecteur électrique de poussières selon la revendication 6 incluant l'unité de collecte de poussières (2) formée de ladite section de chargement (6, 7) intégrée avec ladite section de collecte de poussières (8), dans lequel ladite section de collecte de poussières (8) est détachable de l'unité de collecte de poussières (2).

8. Collecteur électrique de poussières selon la revendication 6, dans lequel l'unité de collecte de poussières (2) inclut un logement (5) de l'unité de collecte de poussières (2), et l'unité principale inclut un logement de l'unité principale, dans lequel au moins l'un ou l'autre des logements est constitué de l'un d'un matériau non conducteur et d'un matériau faiblement conducteur.

9. Collecteur électrique de poussières selon la revendication 1 incluant une unité de collecte de poussières (2) rectangulaire formée d'au moins ladite section de chargement (6, 7) intégrée avec ladite section de collecte de poussières (8), dans lequel ledit moyen de génération d'onde acoustique (14) est disposé au niveau d'un centre substantiel du sens longitudinal de l'unité de collecte de poussières (2) pour envoyer l'onde acoustique vers les côtés droit et gauche du sens longitudinal.

10. Collecteur électrique de poussières selon l'une quelconque de la revendication 1 à la revendication 8, dans lequel le collecteur de poussières (2) est reçu dans un logement (5), et un réflecteur (19) pour réfléchir l'onde acoustique générée par ledit moyen de génération d'onde acoustique (14) est disposé sur au moins une partie d'une paroi latérale (18) du logement (5).

11. Collecteur électrique de poussières selon la revendication 10, dans lequel le réflecteur (19) est disposé face à au moins un sens d'origine de l'onde acoustique.

12. Collecteur électrique de poussières selon la revendication 10, dans lequel le réflecteur (19) est constitué de l'un d'un matériau non conducteur et d'un matériau faiblement conducteur.

13. Collecteur électrique de poussières selon la revendication 1, dans lequel l'onde acoustique est envoyée dans un sens substantiellement vertical jusqu'à un champ électrique appliqué pour la décharge.

14. Collecteur électrique de poussières selon la revendication 1, dans lequel ladite section de chargement (6, 7) et ladite section de collecte de poussières (8) sont disposées dans une voie de soufflage d'air, et ladite section de chargement (6, 7) décharge dans un sens substantiellement parallèle à un sens de soufflage d'air dans la voie de soufflage d'air.

15. Collecteur électrique de poussières selon la revendication 1, dans lequel ladite section de collecte de poussières (8) utilise un filtre électret.

16. Collecteur électrique de poussières selon l'une quelconque de la revendication 1 à la revendication 8, dans lequel le collecteur électrique de poussières est reçu dans un logement (5) et un élément de tampon d'onde acoustique pour absorber l'onde acoustique générée par ledit moyen de génération d'onde acoustique est disposé en un point prédéterminé du logement.

17. Collecteur électrique de poussières comprenant :
une unité de collecte de poussières (2) incluant une section de chargement (6, 7) ayant une électrode de décharge (6) et une contre-électrode (7) pour charger des poussières par décharge corona,
le collecteur électronique de poussières comprenant en outre un moyen de génération de vibrations (20) qui est couplé à au moins l'une de l'électrode de décharge (6) et de la contre-électrode (7), pour appliquer des vibrations mécaniques à celle-ci,
**caractérisé en ce que** le moyen de génération de vibrations (20) génère une fréquence de vibrations d'une région d'onde ultrasonore, d'où il résulte que les vibrations diffusent la décharge corona générée par la section de chargement, et
le collecteur électronique de poussières comprend en outre une section de collecte de poussières (8) située en aval de la section de chargement (6, 7) pour ainsi collecter les poussières chargées par la décharge corona diffusée.

18. Collecteur électrique de poussières selon la revendication 17, dans lequel un corps principal du collecteur de poussières est formé d'au moins la section de chargement (6, 7), la section de collecte de poussières (8) et le moyen de génération de vibrations (20), et la section de collecte de poussières est détachable du corps principal.

19. Collecteur électrique de poussières selon la revendication 17, incluant ladite unité de collecte de poussières (2) formée d'au moins la section de chargement (6, 7) intégrée avec la section de collecte de poussières (8), dans lequel la section de collecte de poussières (8) est détachable de ladite unité de collecte de poussières (2).

20. Collecteur électrique de poussières selon la revendication 17, dans lequel un corps principal du collecteur électrique de poussières inclut :
ladite unité de collecte de poussières (2) qui comprend la section de chargement (6, 7) et la section de collecte de poussières (8) ; et
une unité principale qui comprend le moyen de génération de vibrations (20),
dans lequel ladite unité de collecte de poussières (2) est détachable de l'unité principale.

21. Collecteur électrique de poussières selon la revendication 17, dans lequel la section de chargement (6, 7) et la section de collecte de poussières (8) sont disposées dans une voie de soufflage d'air, et au moins l'une de l'électrode de décharge (6) et de la contre-électrode (7) est mise en vibration dans un sens substantiellement vertical par rapport à un sens de soufflage d'air dans la voie de soufflage d'air.

22. Collecteur électrique de poussières selon la revendication 17, dans lequel la section de collecte de poussières (8) utilise un filtre électret.

23. Soufflante comprenant :
un ventilateur de soufflage ;
une voie de soufflage incluant un collecteur électrique de poussières selon l'une quelconque de la revendication 1 à la revendication 22.

24. Procédé de collecte de poussières, ledit procédé comprenant les étapes de :
génération d'une décharge corona en appliquant un champ électrique entre une électrode de décharge (6) et une contre-électrode (7), les deux électrodes étant disposées au niveau d'une zone de décharge corona dans une zone de passage de flux d'air ; et
collecte de poussières avec une section de collecte de poussières (8) disposée dans la zone de passage de flux d'air ; et
envoi d'une onde acoustique à l'intérieur de la zone de passage de flux d'air ;
dans lequel l'onde acoustique pénètre dans la zone de passage de flux d'air au niveau de la zone de décharge corona,
**caractérisé en ce que** l'onde acoustique est dans la région d'ondes ultrasonores, et l'onde acoustique diffuse la décharge corona générée par l'électrode de décharge (6) et la contre-électrode (7), et
l'étape de collecte comprend la collecte de poussières chargées par ladite décharge corona diffusée.

25. Procédé de collecte de poussières selon la revendication 24, dans lequel l'onde acoustique est envoyée dans un sens substantiellement vertical par rapport à un sens d'application de champ électrique.

26. Procédé de collecte de poussières, ledit procédé comprenant les étapes de :
génération d'une décharge corona en appliquant un champ électrique entre une électrode de décharge (6) et une contre-électrode (7), les deux électrodes étant disposées dans une zone de passage de flux d'air ; et
application de vibrations mécaniques pour faire vibrer au moins l'une de l'électrode de décharge (6) et de la contre-électrode (7) ;
**caractérisé en ce que** lesdites vibrations mécaniques sont d'une région d'ondes ultrasonores, et les vibrations diffusent la décharge corona générée par l'électrode de décharge (6) et la contre-électrode (7), et
le procédé comprend en outre la collecte de poussières chargées par ladite décharge corona diffusée, avec une section de collecte de poussières (8) en aval de l'électrode de décharge (6).
